# EUROPEAN PATENT APPLICATION

(11) **EP 4 640 773 A1**
(43) Date of publication of application: **29.10.2025**
(21) Application number: 23906306.8
(22) Date of filing: 01.05.2023
(51) Int. Cl.: C09D 11/38, B41M 5/00, B41J 2/01

(54) **INKJET INK COMPOSITION, RECORDED ARTICLE, INKJET RECORDING METHOD, AND INKJET RECORDING SYSTEM**

(30) Priority: 20.12.2022 JP 2022203345
(71) Applicant: KONICA MINOLTA, INC., Tokyo 100-7015 (JP)
(72) Inventor: AOYAMA, Ryo, Tokyo 100-7015 (JP); TANAKA, Kyohei, Tokyo 100-7015 (JP)
(74) Representative: MFG Patentanwälte Meyer-Wildhagen Meggle-Freund Gerhard PartG mbB
(86) International application number: PCT/JP2023/017080
(87) International publication number: WO 2024/134920

(57) **Abstract**

This inkjet ink composition is cured at least by actinic rays or heat, and contains: a compound having a structure represented by a general formula (1) or a salt (A) thereof, a (meth)acrylate (B) having a (meth)acrylate equivalent in the range of 71 to 110; and a (meth)acrylate (C) having a (meth)acrylate equivalent in the range of 200 to 500. [In general formula (1), X represents a substituent having, at an end thereof, at least one selected from an acryloyl group, a methacryloyl group, an aryl group, a vinyl group, and a derivative thereof. Q represents an oxygen atom or NR4, where R4 represents a hydrogen atom, a substituted or unsubstituted alkyl group, or a substituted or unsubstituted aryl group. R1 represents a C1-6 unsubstituted alkylene group.]

## Description

### Technical Field

The present invention relates to an inkjet ink composition, a recorded article, an inkjet recording method, and an inkjet recording system. In particular, the present invention relates to an inkjet ink composition and the like that can provide a cured product excellent in coatability, adhesion, coating film hardness, and chemical resistance as an inkjet ink composition.

### Background Art

On a printed wiring board in a printed circuit board, an ink is applied and cured to form an insulating film (solder resist film) for the purpose of protecting a circuit pattern. As a method of forming the solder resist film, for example, an inkjet method is known, and specifically, inkjet ink (hereinafter, also simply referred to as "ink") is applied, cured by light, and then cured by heat.

A solder resist formed by an inkjet method is required to have high adhesion to a copper base material. Patent Literature 1 discloses an inkjet ink for a resist containing a photopolymerizable compound having an acidic group. As the photopolymerizable compound having an acidic group, a carboxy group, a phosphate group or a sulfonic acid group is used. By using them, high adhesion to the copper substrate can be obtained. However, when a photopolymerizable compound having a phosphate group or a sulfonic acid group is used, the viscosity and particle diameter of the ink are likely to increase due to pigment aggregation. In particular, when the ink stays at a high temperature in an ink pack or an inkjet head, there has been a problem that fluctuation of an ejection amount or clogging of an inkjet head filter tends to occur.

In addition, in a case of using a photopolymerizable compound having a carboxy group, an increase in the viscosity and the particle diameter is less likely to occur compared to a phosphate group or a sulfonic acid group. However, when a photopolymerizable compound having a carboxy group is used, there has been a problem that it is difficult to obtain sufficient coating film hardness as a resist film.

Patent Literature 2 discloses an inkjet ink using a bifunctional (meth) acrylate compound having a weightaverage molecular weight of less than 500 (a (meth) acrylate compound having a low (meth) acrylic equivalent). When such a (meth) acrylate compound having a low (meth) acrylic equivalent is contained, sufficient coating film hardness can be obtained.

However, there has been a problem that chemical resistance (acid resistance) is deteriorated only by containing such a photopolymerizable compound having a carboxy group and a (meth) acrylate compound having a low (meth) acrylic equivalent.

### Citation List

### Patent Literature

Patent Literature 1 JP 2020-37645A
Patent Literature 2: JP 2019-167467A

### Summary of Invention

### Invention Problem

The present invention has been conceived in consideration of the above. An object of the present invention is to provide an inkjet ink composition that can provide a cured product having excellent coatability, adhesion, coating film hardness, and chemical resistance for inkjet use, a recorded article, an inkjet recording method, and an inkjet recording system.

### Solution to Problem

In order to solve the above-described problems, the present invention has found, in the process of studying the cause and the like of the above-described problems, the importance of using a compound (A) having a carboxy group and having a specific structure, a (meth) acrylate (B) having a low (meth) acrylic equivalent, and a (meth) acrylate (C) having a high (meth) acrylic equivalent in combination.

The object of the present invention described above is achieved by the following means.
1. An inkjet ink composition which is cured by at least active energy ray or heat, wherein the inkjet ink composition contains:
   a compound having a structure represented by the following General Formula (1) or a salt thereof (A);
   a (meth) acrylate (B) having a (meth) acrylic equivalent within a range of 71 to 110; and
   a (meth) acrylate (C) having a (meth) acrylic equivalent within a range of 200 to 500. 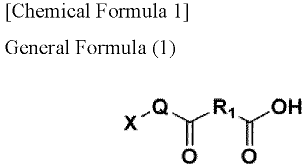 [In the General Formula (1), X represents a substituent group having at least one selected from an acryloyl group, a methacryloyl group, an allyl group, a vinyl group, and derivatives thereof at a terminal thereof.
   Q represents an oxygen atom or NR₄, and R₄ represents a hydrogen atom, a substituted or unsubstituted alkyl group, or a substituted or unsubstituted aryl group.
   R₁ represents an unsubstituted alkylene group having 1 to 6 carbon atoms.]
2. The inkjet ink composition according to claim 1, wherein in the General Formula (1), X represents a substituent group having at least one selected from a derivative of a methacryloyl group or an acryloyl group at a terminal thereof.
3. The inkjet ink composition according to claim 1, wherein in the General Formula (1), Q represents an oxygen atom.
4. The inkjet ink composition according to claim 1, wherein in the General Formula (1), R₁ represents an unsubstituted alkylene group having 1 or 2 carbon atoms.
5. The inkjet ink composition according to claim 1, wherein the number of (meth) acryloyl groups in the (meth) acrylate (C) having the (meth) acrylic equivalent within the range of 200 to 500 is seven or less.
6. The inkjet ink composition according to claim 1, wherein a molecular weight of the (meth) acrylate (C) having the (meth) acrylic equivalent within the range of 200 to 500 is within a range of 200 to 2000.
7. The inkjet ink composition according to claim 1, wherein the (meth) acrylate (C) having the (meth) acrylic equivalent within the range of 200 to 500 contains any of an ethylene oxide-modified portion, a propylene oxide-modified portion, and an ε-caprolactone-modified portion.
8. The inkjet ink composition according to claim 1, wherein the (meth) acrylate (C) having the (meth) acrylic equivalent within the range of 200 to 500 is an ε-caprolactone-modified product of erythritol hexaacrylate.
9. The inkjet ink composition according to claim 1, wherein the (meth) acrylate (B) having the (meth) acrylic equivalent within the range of 71 to 110 is erythritol hexaacrylate or dipentaerythritol pentaacrylate.
10. The inkjet ink composition according to claim 1, wherein the inkjet ink composition further contains a gelling agent.
11. The inkjet ink composition according to claim 1, wherein the inkjet ink composition is used as an inkjet ink for forming a solder resist pattern used in a printed circuit board.
12. A recorded article obtained by curing the inkjet ink composition according to any one of claims 1 to 11 by at least active energy ray or heat.
13. An inkjet recording method using an inkjet ink composition, wherein
   the inkjet recording method uses the inkjet ink composition according to any one of claims 1 to 11, and includes:
   ejecting the inkjet ink composition from an inkjet head to land on a recording medium; and
   curing the inkjet ink composition landed on the recording medium by at least active energy ray or heat.
14. An inkjet recording system using an inkjet ink composition, wherein
   the inkjet recording system uses the inkjet ink composition according to any one of claims 1 to 11, and
   the inkjet recording system includes an inkjet head to eject the inkjet ink composition, an active energy ray irradiation section to irradiate the inkjet ink composition having landed on a recording medium by at least active energy ray, or a heating section to heat the inkjet ink composition.

### Advantageous Effects of Invention

The above-described means of the present invention can provide an inkjet ink composition that can produce a cured product having excellent coatability, adhesion, coating film hardness, and chemical resistance for inkjet use. It is also possible to provide a recorded article, an inkjet recording method, and an inkjet recording system using the inkjet ink composition.

Although the mechanism of the effect of the present invention is not clear, the inventors infer the mechanism as follows.

In general, a compound having an ester bond (or an amide bond) is hydrolyzed by heating in the presence of water and an acid to produce an alcohol (or an amine) and a carboxylic acid. This reaction is an equilibrium reaction.

The compound having a structure represented by General Formula (1) or a salt thereof (A) in the present invention has a dicarboxylic acid structure. Therefore, when the compound or the salt thereof (A) is contained in the ink, the compound or the salt thereof (A) can be coordinated to the metal substrate and can be firmly adhered to the metal substrate as compared with a general carboxylic acid acrylate.

Furthermore, since the ink of the present invention contains the (meth) acrylate (B) having a (meth) acrylic equivalent within a range of 71 to 110, the crosslinking density increases, and the hardness of a coating film formed from the ink increases. Here, the reason why the lower limit of the (meth) acrylic equivalent of the (meth) acrylate (B) is set to 71 is that it is defined based on the molecular weight of the acryloyl group (CH ₂CHCO _{2 )}. In addition, the upper limit of the (meth) acrylic equivalent was set to 110 because high hardness can be obtained.

Furthermore, since the ink of the present invention contains the (meth) acrylate (C) having a (meth) acrylic equivalent within a range of 200 to 500, the reactivity becomes low, and the ink is excellent in chemical resistance when formed into a coating film. Here, the lower limit of the (meth) acrylic equivalent of the (meth) acrylate (C) is set to 200 from the viewpoint of chemical resistance. The upper limit of the (meth) acrylic equivalent is set to 500 because excessively high (meth) acrylic equivalent reduces the hardness.

### Description of Embodiments

The inkjet ink composition of the present invention is an inkjet ink composition which is cured at least by active energy ray or heat, and contains (A) a compound having a structure represented by the following general formula (1) or a salt thereof, (B) a (meth) acrylate having a (meth) acrylic equivalent within a range of 71 to 110, and (C) a (meth) acrylate having a (meth) acrylic equivalent within a range of 200 to 500. 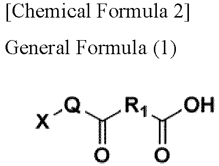 [In the General Formula (1), X represents a substituent group having at least one selected from an acryloyl group, a methacryloyl group, an allyl group, a vinyl group, and derivatives thereof at a terminal thereof.
Q represents oxygen atom or NR ₄, and R₄represents hydrogen atom, substituted or unsubstituted alkyl group, or substituted or unsubstituted aryl group.
R ₁ represents an unsubstituted alkylene group having 1 to 6 carbon atoms.]

The above-described features are technical features common to or corresponding to the following embodiment.

In an embodiment of the present invention, in the General Formula (1), X preferably represents a substituent group having, at a terminal, at least one selected from derivatives of an acryloyl group or a methacryloyl group. Thus, the reactivity of the compound having a structure represented by General Formula (1) or a salt thereof (A) can be improved, and adhesion can be improved.

Furthermore, in the General Formula (1), Q preferably represents an oxygen atom from the viewpoint of enhancing adhesion.

Further, in the General Formula (1), R₁ preferably represents an unsubstituted alkylene group having 1 or 2 carbon atoms from the viewpoint of enhancing the adhesion.

It is preferable that the number of (meth) acryloyl groups of the (meth) acrylate having a (meth) acrylic equivalent in the range of 200 to 500 is 7 or less in terms of chemical resistance.

The molecular weight of the (meth) acrylate having a (meth) acrylic equivalent within a range of 200 to 500 is preferably within a range of 200 to 2000. When the molecular weight is within the above range, the viscosity of the ink is within an appropriate range, the inkjet ejection is stable, and the coatability is excellent.

The (meth) acrylate having a (meth) acrylic equivalent within a range of 200 to 500 preferably contains any of an ethylene oxide-modified portion, a propylene oxide-modified portion, and an ε-caprolactone-modified portion. Thus, the (meth) acrylate has the same skeleton as the (meth) acrylate having a (meth) acrylic equivalent within the range of 71 to 110, and thus has good affinity.

In particular, the (meth) acrylate having a (meth) acrylic equivalent in the range of 200 to 500 is preferably a ε-caprolactone-modified product of erythritol hexaacrylate.

The (meth) acrylate having a (meth) acrylic equivalent within a range of 71 to 110 is preferably erythritol hexaacrylate or dipentaerythritol pentaacrylate. Thus, high coating film hardness can be obtained.

It is preferable to further contain a gelling agent in that the ink on a recording medium can be brought into a gelled state and temporarily fixed, and wet-spreading of the ink can be suppressed. Furthermore, by reducing the water absorbability of the ink, the hydrolysis of the compound having a structure represented by the General Formula (1) or the salt (A) thereof can be suppressed. As a result, the generation of a precipitate can be suppressed, and the ejection characteristics of the inkjet become satisfactory.

The inkjet ink composition of the present invention is suitably used for an inkjet ink for forming a solder resist pattern used for a printed circuit board. In addition, the inkjet ink composition of the present invention is suitably used for a recorded article cured by at least an active energy ray or heat.

An inkjet recording method of the present invention is an inkjet recording method using an inkjet ink composition, the inkjet recording method using the inkjet ink composition and including the steps of: ejecting the inkjet ink composition from an inkjet head to cause the inkjet ink composition to land on a recording medium; and curing the inkjet ink composition having landed on the recording medium at least with active energy ray or heat.

Thus, a cured product (recorded article) excellent in coatability, adhesion, coating film hardness, and chemical resistance for inkjet can be obtained.

The inkjet recording system of the present invention is an inkjet recording system using an inkjet ink composition, wherein the inkjet ink composition is used, and the inkjet recording system has an inkjet head for ejecting the inkjet ink composition, an active energy ray irradiation section for irradiating at least an active energy ray to the inkjet ink composition landed on a recording medium, or a heating section for heating the inkjet ink composition.

Thus, a cured product (recorded article) excellent in coatability, adhesion, coating film hardness, and chemical resistance for inkjet can be obtained.

Hereinafter, the present invention, constituent element of the present invention, and embodiments and modes for carrying out the present invention will be described. In the present description, "to" between two numerical values is used to indicate a range of values including the two numerical values as a lower limit value and an upper limit value.

### [Inkjet Ink Composition of the Present Invention]

The inkjet ink composition of the present invention is an inkjet ink composition which is curable by at least active energy ray or heat.

A compound having a structure represented by the following general formula (1) or a salt thereof (A)
(meth) acrylate (B) having a (meth) acrylic equivalent in a range of 71 to 110
(C) a (meth) acrylate having a (meth) acrylic equivalent within a range of 200 to 500. 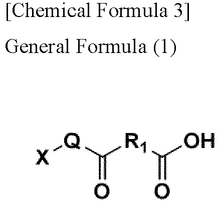
[In the General Formula (1), X represents a substituent group having at least one selected from an acryloyl group, a methacryloyl group, an allyl group, a vinyl group, and derivatives thereof at a terminal thereof.
Q represents oxygen atom or NR ₄, and R₄ represents hydrogen atom, substituted or unsubstituted alkyl group, or substituted or unsubstituted aryl group.
R₁ represents an unsubstituted alkylene group having 1 to 6 carbon atoms.]

The inkjet ink composition of the present invention functions as an insulating film (solder resist) by being applied to a substrate and then cured with light or heat in various fields such as metal processing, electronic circuit, printed circuit boards, plate making, the semiconductor field, and color filter. Furthermore, since it can be removed with an alkali after photocuring, it also functions as an etching resist used for forming an etching pattern on a substrate.

Specifically, on a conductive oxide film of copper, zinc, or the like formed on a substrate, the inkjet ink composition according to the present invention is patterned by inkjet printing and cured with light to form a resist film. Next, the oxide film in a portion not covered with the resist film is removed with an etching solution containing an acid, and furthermore, the resist film covering the oxide film is removed with an alkali, whereby a precise circuit or pattern can be formed.

In addition to the above-described applications, it can be suitably used mainly for the purpose of patterning a film having both adhesion and hardness with respect to a substrate having an inorganic surface, such as metal and glass.

The inkjet ink composition according to the present invention is an ink composition curable at least with active energy ray or heat. The inkjet ink composition may be cured only by an active component, may be cured only by heat, or may be cured by active light and heat.

The "active energy ray" is a radiation (an electromagnetic wave and a particle beam) which can provide energy for generating a reaction initiating species such as a polymerization reaction in the ink composition by the irradiation, and includes an α-ray, a γ-ray, an X-ray, an ultraviolet ray, an electron beam, and the like. Among these, ultraviolet rays and electron beams are preferable, and ultraviolet rays are more preferable, from the viewpoints of curing sensitivity and the availability of an apparatus.

### [1 Compound having structure represented by General Formula (1) or salt thereof (A)]

When the inkjet ink composition (hereinafter, also simply referred to as "ink") of the present invention contains the compound having the structure represented by General Formula (1) or the salt (A) thereof, it is possible to obtain high adhesion as a recorded article and to suppress fluctuation in viscosity and particle diameter during longterm storage and retention.

In General Formula (1), it is preferable that X represents a substituent group having at least one selected from derivatives of an acryloyl group or a methacryloyl group at a terminal thereof, from the viewpoint of improving reactivity of the compound having a structure represented by General Formula (1) or a salt thereof (A) and improving adhesion.

In addition, the substituent group represented by X preferably has a total carbon number of 50 or less, and more preferably 30 or less, from the viewpoint of decreasing the viscosity of the ink and improving inkjet suitability.

In addition, in the General Formula (1), Q preferably represents an oxygen atom from the viewpoint of improving adhesion.

Further, in the General Formula (1), R₁ preferably represents an unsubstituted alkylene group having 1 or 2 carbon atoms from the viewpoint of enhancing the adhesion.

Furthermore, it is preferable that the compound having the structure represented by the General Formula (1) is not a salt, from the viewpoints of enhancing compatibility with other monomers and hydrophobicity of the ink, and suppressing hydrolysis of the compound having the structure represented by the General Formula (1) or a salt thereof (A).

Specific examples of the compound having the structure represented by General Formula (1) or a salt thereof are illustrated below, but the present invention is not limited thereto.

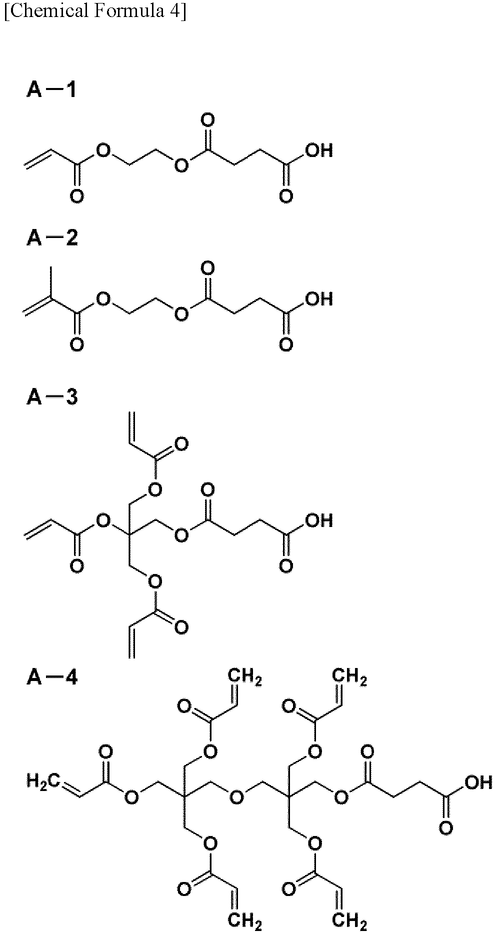

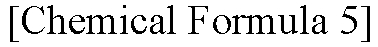

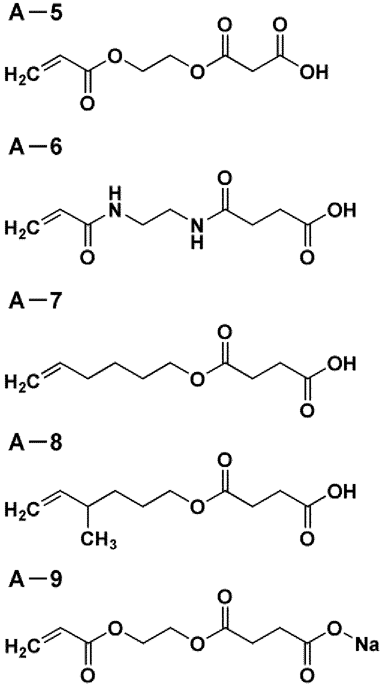

A larger content of the compound having a structure represented by General Formula (1) or a salt thereof (A) contributes to adhesion more. However, when the content is too large, it promotes its own hydrolysis as an acid catalyst. Therefore, the content is preferably in the range of 1% by mass to 50% by mass, and more preferably in the range of 3% by mass to 20% by mass with respect to the entire ink.

### [2 (Meth) acrylate (B) having a (meth) acrylic equivalent within a range of 71 to 110]

When the ink of the present invention contains the (meth) acrylate (B) having a (meth) acrylic equivalent within the range of 71 to 110 (hereinafter, also referred to as "low (meth) acrylic equivalent (meth) acrylate (B)"), the crosslinking density increases, and the coating film hardness improves.

In the present invention, the "(meth) acrylic equivalent" is a value obtained by dividing the molecular weight of the (meth) acrylate monomer by the number of functional groups.

Therefore, a monomer having a lower acrylic equivalent has more crosslinking points in the molecule and higher reactivity. In addition, a monomer having a higher acrylic equivalent has a lower reactivity and a higher molecular weight, and thus tends to be easily thickened.

In the present invention, the term "low (meth) acrylic equivalent" refers to a (meth) acrylate having a (meth) acrylic equivalent within the range of 71 to 110.

As the (meth) acrylate (B) having a low (meth) acrylic equivalent according to the present invention, known ones can be widely adopted. The (meth) acrylate (B) having a low (meth) acrylic equivalent preferably has 3 to 6 (meth) acryloyl groups.

The (meth) acrylate (B) having a low (meth) acrylic equivalent may be used alone or in a plurality of two or more kinds thereof in the ink of the present invention.

Examples of the (meth) acrylate (B) having a low (meth) acrylic equivalent according to the present invention, for example, a (meth) acrylate having three (meth) acryloyl groups (also referred to as a "trifunctional (meth) acrylate") include trimethylolpropane tri (meth) acrylate and pentaerythritol tri (meth) acrylate.

Examples of the (meth) acrylate having four (meth) acryloyl groups (also referred to as "tetrafunctional (meth) acrylate") include pentaerythritol tetra (meth) acrylate.

Examples of the (meth) acrylate having five (meth) acryloyl groups (also referred to as "pentafunctional (meth) acrylate") include dipentaerythritol penta (meth) acrylate.

Examples of the (meth) acrylate having six (meth) acryloyl groups (also referred to as "hexafunctional (meth) acrylate") include dipentaerythritol hexa (meth) acrylate.

The (meth) acrylate (B) having a low (meth) acrylic equivalent according to the present invention is preferably erythritol hexaacrylate or dipentaerythritol pentaacrylate among those described above. Thus, since the number of functional groups is large and the (meth) acrylic equivalent is low, the coating film hardness is improved.

An example of a commercial product of the (meth) acrylate (B) having a low (meth) acrylic equivalent is M500 (DPPA, 5-functional acrylate, sartomer), M600 (DPHA, 6-functional acrylate, sartomer), EM235 (PET3A), three functional acrylate, (manufactured by Eko Chemical Co., Ltd, EM241 (PET4A), four functional acrylate, (manufactured by Eko Chemical Co., Ltd, SR351 (TMPTA, three functional acrylate, sartomer), and the like.

The molecular weight and the (meth) acrylic equivalent of these commercially available products are described in Tables of Examples described later.

The content of the low (meth) acrylic equivalent (meth) acrylate (B) is preferably in the range of 0.1 to 20% by mass and more preferably in the range of 5 to 15% by mass relative to the total ink. It is more preferable that the content is set in such a range from the viewpoints of imparting an appropriate viscosity to the ink and inkjet coatability.

### [3 (Meth) acrylate (C) having a (meth) acrylic equivalent within a range of 200 to 500]

When the ink of the present invention contains the (meth) acrylate (C) having a (meth) acrylic equivalent in the range of 200 to 500 (hereinafter, also referred to as "high (meth) acrylic equivalent (meth) acrylate (C)"), the amount of functional groups becomes relatively small, and the reactivity becomes low. As a result, a coating film having excellent chemical resistance (acid resistance) can be obtained.

In the present invention, the "high (meth) acrylic equivalent" is a (meth) acrylate having the (meth) acrylic equivalent in the range of 200 to 500. Preferably, it is a (meth) acrylate wherein the (meth) acrylic equivalent is in the range of 200 to 400, preferably the (meth) acrylic equivalent is in the range of 200 to 300, preferably the (meth) acrylic equivalent is in the range of 200 to 250. If the amount is less than the lower limit, the chemical resistance decreases. If the upper limit is exceeded, the coating film hardness decreases.

The (meth) acrylate (C) having a high (meth) acrylic equivalent preferably has 7 or less (meth) acryloyl groups. Thereby, high chemical resistance can be obtained.

In addition, it is preferable that the molecular weight of the (meth) acrylate having a high (meth) acrylic equivalent is in a range of 200 to 2000. Thus, the ink can be adjusted to have an appropriate viscosity and satisfactory inkjet coatability can be achieved.

Furthermore, the (meth) acrylate (C) having a high (meth) acrylic equivalent may be a modified product.

Examples of the modified product (meth) acrylate include ethylene oxide-modified (meth) acrylates such as ethylene oxide-modified (9 or 15) trimethylolpropane tri (meth) acrylate, propylene oxide-modified (meth) acrylates such as propylene oxide-modified nonylphenol acrylate, and caprolactam-modified (meth) acrylates such as caprolactam-modified dipentaerythritol hexa (meth) acrylate.

Among the (meth) acrylate which are modified products, it is preferable to contain any one of an ethylene oxide-modified portion, a propylene oxide-modified portion, and an ε-caprolactone-modified portion.

Specifically, the (meth) acrylate (C) having a high (meth) acrylic equivalent is preferably a ε-caprolactone-modified product of erythritol hexaacrylate.

Examples of commercially available products of the caprolactam-modified dipentaerythritol hexaacrylate include DPCA60 and DPCA120 (both are 6-functional acrylates, manufactured by Nippon Kayaku Co., Ltd).

Preferable examples of commercially available products of the (meth) acrylate (C) having a high (meth) acrylic equivalent include DPCA60 (DP6CAHA, CA-modified, 6-functional acrylate, manufactured by Nippon Kayaku Co., Ltd), DPCA120 (DP12CAHA, CA-modified, 6-functional acrylate, manufactured by Nippon Kayaku Co., Ltd), EM2382 (TMP (EO) 9TA,EO-modified, 3-functional acrylate, manufactured by Nagoya Chemical Co., Ltd), SR9035 (TMP (EO) 15TA, EO-modified, 3-functional acrylate, manufactured by Sartomer Co., Ltd), M1602 (NP (PO) 2A,PO-modified, mono-functional acrylate, manufactured by Miwon Co., Ltd), M280 (PEG400DA, 2-functional acrylate, manufactured by Miwon Co., Ltd), and M2200 (BPA (EO)20DA,EO-modified, 2-functional acrylate, manufactured by Miwon Co., Ltd).

The molecular weight and the (meth) acrylic equivalent of these commercially available products are described in Tables of Examples described later.

The content of the high (meth) acrylic equivalent (meth) acrylate (C) is preferably in the range of 0.1 to 20% by mass and more preferably in the range of 5 to 15% by mass relative to the total ink. It is more preferable that the content is within the above range from the viewpoints of imparting an appropriate viscosity to the ink and inkjet coatability.

### [4 Polymerization Initiator]

The ink of the present invention can be cured by radical polymerization or ionic polymerization, but in the present invention, a radical polymerization initiator is preferably used as the polymerization initiator.

The ink according to the present invention may contain only one polymerization initiator, or may contain two or more polymerization initiators.

Examples of the radical polymerization initiator include an α-cleavage type radical polymerization initiator (also referred to as a "Norrish I type polymerization initiator") and a hydrogen abstraction type radical polymerization initiator (also referred to as a "Norrish II type polymerization initiator").

The content of the α-cleavage type radical polymerization initiator is preferably in the range of 0.3 to 6% by mass relative to the total mass of the ink of the present invention. Furthermore, the content of the hydrogen-abstraction type radical polymerization initiator is preferably in the range of 0.5 to 10% by mass relative to the total mass of the ink of the present invention.

The α-cleavage type radical polymerization initiator is an initiator that cleaves after photoexcitation and directly provides an initiating radical.

In addition, the hydrogen abstraction type radical polymerization initiator is activated by an active energy ray (for example, an ultraviolet ray). Then, it is a photopolymerization initiator which forms a free radical by hydrogen abstraction from the second compound, and the second compound becomes an actual initiating free radical. This second compound is called a polymerization synergist or co-initiator.

Both of the α-cleavage type radical polymerization initiator and the hydrogen abstraction type radical polymerization initiator can be used alone or in combination in the present invention.

Examples of the α-cleavage-type radical polymerization initiator include acetophenone-based initiators, Benzoin-based initiators, acylphosphine oxide-based initiators, benzyl-and methylphenylglyoxy esters.

Examples of the acetophenone-based initiator include diethoxyacetophenone, 2-hydroxy-2-methyl-1-phenylpropan-1-one, benzyl dimethyl ketal, 1-(4-isopropylphenyl)-2-hydroxy-2-methylpropan-1-one, 4-(2-Hydroxyethoxy)phenyl-(2-hydroxy-2-propyl)ketone, 1-hydroxycyclohexyl-phenylketone, 2-methyl-2-morpholino(4-thiomethylphenyl)propan-1-one and 2-benzyl-2-dimethylamino 1-(4-morpholinophenyl)-butanone.

Examples of the Benzoin-based initiator include Benzoin, benzoin methyl ether, and benzoin isopropyl ether.

Examples of the acylphosphine oxide-based initiator include 2,4,6-trimethylbenzoin diphenylphosphine oxide and phenylbis (2,4,6-trimethylbenzoyl) phosphineoxide.

Examples of the hydrogen-abstraction-type radical initiator include benzophenone-based initiators, thioxanthone-based initiators, aminobenzophenone-based initiators, 10-butyl-2-chloroacridone, 2-ethylanthraquinone, 9,10-phenanthrenequinone, and camphorquinone.

Examples of the benzophenone-based initiator include benzophenone, methyl o-benzoylbenzoate-4-phenylbenzophenone, 4,4'-dichlorobenzophenone, hydroxybenzophenone, 4-benzoyl-4'-methyl-diphenyl sulfide, acrylated benzophenone, 3, 3', 4, 4'-tetra (t-butylperoxycarbonyl) benzophenone and 3,3'-dimethyl-4-methoxybenzophenone.

Examples of the thioxanthone-based initiator include 2-isopropylthioxanthone, 2,4-dimethylthioxanthone, 2,4-diethylthioxanthone, and 2,4-dichlorothioxanthone.

Examples of the aminobenzophenone-based initiator include Michler's ketone and 4,4'-diethylaminobenzophenone.

### [5 polymerization inhibitor]

It is preferable that the ink of the present invention further contains a polymerization inhibitor. By containing the polymerization inhibitor, the adhesiveness between a plurality of compounds having curability can be reduced.

In the present invention, the term "polymerization inhibitor" includes all compounds which are added to inhibit a polymerization reaction during preparation of an ink containing a polymerizable compound or during storage after the preparation.

In the present invention, various conventionally known polymerization inhibitors can be used, but as the polymerization inhibitor, it is more preferable to contain any polymerization inhibitor of an N-oxyl-based polymerization inhibitor, a phenol-based polymerization inhibitor containing an o-t-butyl group, or a polymerization inhibitor having two or more aromatic rings from the viewpoint of exhibiting the effect.

In addition, it is more preferable to contain an N-oxyl-based polymerization inhibitor among these from the viewpoint of adhesion to a printed wiring board.

In the ink of the present invention, the content of the polymerization inhibitor is preferably in the range of 0.05 to 0.5% by mass relative to the total mass of the ink.

### [5-1. N-Oxyl Based Polymerization Inhibitor]

Examples of the N-oxyl-based polymerization inhibitor include 4-hydroxy-2, 2,6,6-tetramethylpiperidine-N-oxyl (TEMPO), 4-hydroxy-2, 2,6,6-tetramethyl-piperidine-N-oxyl, 4-oxo-2, 2,6,6-tetramethyl-piperidine-N-oxyl, 4-methoxy-2, 2,6,6-tetramethyl-piperidine-N-oxyl, 4-acetoxy-2, 2,6,6-tetramethyl-piperidine-N-oxyl, and Irgastab (R) UV10 (manufactured by Basf SE).

### [5-2. Phenolic Polymerization Inhibitor]

An example of the phenol-based polymerization inhibitor includes 2,6-di-tert-butylphenol, 2,4-di-tert-butylphenol, 2-tert-butyl 4,6-dimethylphenol, 2,6-di-tert-butyl-4-methylphenol, 246-tri-tert-butylphenol, 2,6-di-t-butyl-p-cresol (butylated hydroxytoluene: BHT), 4-methoxyphenol, 2-methoxy-4-methylphenol and the like.

### [5-3. Quinone - Based Polymerization Inhibitor]

Examples of the quinone-based polymerization inhibitor include hydrochinone, methoxyhydroquinone, benzoquinone, 1,4-naphthoquinone, p-tert-butylcatechol and the like.

### [5-4. Amine Polymerization Inhibitor]

Examples of the amine-based polymerization inhibitor include alkylated diphenylamine, N,N'-diphenyl-p-phenylenediamine, and phenothiazine.

### [5-5. Other polymerization inhibitors]

Other examples include copper dithiocarbamate-based polymerization inhibitors such as copper dimethyldithiocarbamate, copper diethyldithiocarbamate, and copper dibutyldithiocarbamate.

Only one of these may be contained, or two or more of these may be contained.

Among these, N-oxyl-based and quinone-based polymerization inhibitors are preferable, and 4-hydroxy-2, 2,6,6-tetramethylpiperidine-N-oxyl (TEMPO), 2,6-di-t-butyl-p-cresol (butylated hydroxytoluene: BHT), 2,4-di-tert-butylphenol, and as a polymerization inhibitor having two or more aromatic rings, naphthoquinone and the like are preferable.

### [6 gelling agent]

It is preferable that the ink of the present invention further contains a gelling agent.

When the gelling agent is contained, the ink on the recording medium can be temporarily fixed (pinned) in a gel state, and the wetting and spreading of the ink can be suppressed. Furthermore, hydrolysis of the compound having a structure represented by General Formula (1) or the salt (A) thereof can be suppressed by reducing the water absorptivity of the ink.

The gelling agent preferably crystallizes at a temperature equal to or lower than the gelation temperature of the ink.

The term "gelation temperature" refers to a temperature at which the gelling agent undergoes a phase transition from a sol to a gel and the viscosity of the composition suddenly changes when the composition that has been solated or liquefied by heating is cooled.

Specifically, the solated or liquefied composition is cooled while measuring the viscosity with a viscoelasticity measurement apparatus (for example, MCR300, manufactured by Anton Paar GmbH). The temperature at which the viscosity rapidly increases can be defined as the gelation temperature of the composition.

In the present invention, when the gelling agent is crystallized in the ink, a structure in which the polymerizable compound (compound involved in polymerization, such as the compound having a structure represented by the General Formula (1) or a salt thereof (A), the (meth) acrylate (B) having a low (meth) acrylic equivalent, and the (meth) acrylate (C) having a high (meth) acrylic equivalent) is included in a three dimensional space formed by the gelling agent crystallized in a plate shape, that is, a so-called card house structure is formed. In order to form the card house structure, the polymerizable compound and the gelling agent dissolved in the ink are preferably compatible with each other.

An example of a gelling agent suitable for forming a card house structure includes aliphatic ketone, aliphatic ester, petroleum-based wax, vegetable wax, animal-based wax, mineral wax, hydrogenated castor oil, modified wax, higher fatty acid, higher alcohol, hydroxystearic acid, fatty acid amide, including N-substituted fatty acid amides and specialty fatty acid amides, higher amine, esters of sucrose fatty acids, synthetic wax, dibenzylidene sorbitol, dimer acid and dimer diol.

Among these, aliphatic ketones, aliphatic esters, higher fatty acid, and higher alcohol having a hydrocarbon group having a range of 9 to 25 carbon atoms are preferable from the viewpoint of improving the pinning properties.

Only one type of gelling agent may be contained, or two or more types of gelling agent may be contained.

### [6-1. Aliphatic Ketone]

Examples of the aliphatic ketone include dilignoceryl ketone, dibehenyl ketone, distearyl ketone, dieicosyl ketone, dipalmityl ketone, dilauryl ketone, dimyristyl ketone, myristyl palmityl ketone, palmityl stearyl ketone and the like.

### [6-2. Aliphatic Ester]

Examples of the aliphatic ester include fatty acid esters of monoalcohols such as behenyl behenate, icosyl icosanoate, and oleyl palmitate; and fatty acid esters of polyhydric alcohols such as glycerin fatty acid ester, sorbitan fatty acid ester, propylene glycol fatty acid ester, ethylene glycol fatty acid ester, and polyoxyethylene fatty acid ester.

Examples of commercially available products of the aliphatic ester include EMALEX (R) series manufactured by Nippon Emulsion Co., Ltd, and RIKEMAL (R) series and POEM (R) series manufactured by Riken Vitamin Co., Ltd.

### [6-3. higher fatty acid]

Examples of higher fatty acid include behenic acid, arachidic acid, stearic acid, palmitic acid, myristic acid, lauric acid, oleic acid, and erucic acid.

### [6-4. Higher Alcohol]

Examples of the higher alcohol include stearyl alcohol and behenyl alcohol.

### [6-5. Suitable Gelling Agent]

In the present invention, it is particularly preferable that the gelling agent is an aliphatic ketone represented by the following general formula (G1) or an aliphatic ester represented by the following general formula (G2).

General Formula (G1): R₁ -CO-R ₂

(In General Formula (G1), R₁ and R₂ each independently represent alkyl group which include a linear portion having 12 to 26 carbon atoms and may include a branch. R₁ And the R₂ may be the same or different. Fig.

General Formula (G2): R ₃ -COO-R ₄

(In General Formula (G2), R₃ and R₄ each independently represent alkyl group which include a linear portion having 12 to 26 carbon atoms and may include a branch. R₃ And the R₄ may be the same or different. Fig.

In General Formula (G1) and (G2), when the number of carbon atoms of the linear or branched hydrocarbon group is 12 or more, the crystallinity of the aliphatic ketone represented by General Formula (G1) or the aliphatic ester represented by General Formula (G2) is further enhanced, and a more sufficient space is generated in the card house structure. Therefore, the polymerizable compound is likely to be sufficiently included in the space, and the pinning properties of the ink are improved.

Furthermore, when the linear or branched hydrocarbon group has a carbon number of 26 or less, the melting points of the aliphatic ketone represented by General Formula (G1) and the aliphatic ester represented by General Formula (G2) do not excessively increase, that is, the melting points can be set to temperatures at which the aliphatic ketone and the aliphatic ester are easy to handle, and it is not necessary to excessively heat the ink during ejection of the ink.

An example of the aliphatic ketone represented by the General Formula (G1) includes dilignoceryl ketone (carbon number: 23, 24), dibehenyl ketone (carbon number: 21,22), distearyl ketone (carbon number: 17,18), dieicosyl ketone (carbon number: 19,20), dipalmityl ketone (carbon number: 15,16), dimyristyl ketone (carbon number: 13,14), dilauryl ketone (carbon number: 11,12), lauryl myristyl ketone (carbon number: 11,14), lauryl palmityl ketone (carbon number: 11,16), myristyl palmityl ketone (carbon number: 13,16), myristyl stearyl ketone (carbon number: 13,18), myristylbehenyl ketone (carbon number: 13,22), palmityl stearyl ketone (carbon number: 15,18), valmityl behenyl ketone (carbon number: 15,22) and stearyl behenyl ketone (carbon number: 17,22). Note that the number of carbon atoms in parentheses represents the number of carbon atoms of each of two hydrocarbon groups divided by a carbonyl group.

Examples of commercially available products of the aliphatic ketone represented by General Formula (G1) include 18-Pentatriacontanon and Hentriacontan -16-on manufactured by Alfa Aeser Co., Ltd, and KAO WAX T-1 manufactured by Kao Corporation.

An example of the aliphatic ester represented by the General Formula (G2) includes behenyl behenate (carbon number: 21,22), icosyl icosanoate (carbon number: 19,20), stearyl stearate (carbon number: 17,18), palmityl stearate (carbon number: 16,17), lauryl stearate (carbon number: 12,17), cetyl palmitate (carbon number: 6,15), stearyl palmitate (carbon number: 15,18), myristyl myristate (carbon number: 13,14), cetyl myristate (carbon number: 13,16), octyldodecyl myristate (carbon number: 13,20), stearyl oleate (carbon number: 17,18), stearyl erucate (carbon number: 18,21), stearyl linoleate (carbon number: 17,18), behenyl oleate (carbon number: 18,22) and arachidyl linoleate (carbon number: 17,20). The number of carbon atoms in parentheses represents the number of carbon atoms of each of the two hydrocarbon groups separated by the ester group.

Examples of commercially available products of the aliphatic ester represented by General Formula (G2) include UNISTER (R) M-2222SL and SPERMACETI manufactured by NOF Corporation, EXCEPARL (R) SS and EXCEPARL (R) MY-M manufactured by Kao Corporation, EMALEX (R) CC-18 and EMALEX (R) CC-10 manufactured by Nippon Emulsion Co., Ltd, and AMREPS (R) PC manufactured by Kokyu Alcohol Kogyo Co., Ltd.

In the present invention, the content of the gelling agent is preferably within a range of 1 to 10% by mass with respect to the total mass of the ink.

### [7 Other Ingredients]

### [7-1. Surfactant]

The ink of the present invention may further contain a surfactant, if necessary.

Examples of surfactants include dialkylsulfosuccinates, anionic surfactants such as alkylnaphthalenesulfonates and fatty acid salts, polyoxyethylene alkyl ethers, polyoxyethylene alkyl allyl ethers, nonionic surfactants such as acetylene glycols and polyoxyethylene-polyoxypropylene block copolymers;, alkylamine salts, and cationic surfactants such as quaternary ammonium salts, and a silicone-based or fluorine-based surfactant.

### [7-2. Coloring agent]

The ink of the present invention may further contain a coloring agent, if necessary.

The coloring agent may be a pigment or a dye, but is preferably a pigment from the viewpoint of having good dispersibility in constituent components of the ink and excellent weather resistance.

The pigment is not particularly limited, and examples thereof include organic pigments or inorganic pigments having the following numbers listed in the Color Index.

The ink of the present invention may contain only one type of coloring agent, may contain two or more types of coloring agents, and may be adjusted to a desired color.

The content of the coloring agent is preferably in a range of 0.1 to 20% by mass and more preferably in a range of 0.2 to 10% by mass with respect to the total mass of the ink.

### (pigment)

### <<red or magenta pigment>>

Examples of red or magenta pigments include Pigment Red 3, 5, 19, 22, 31, 38, 43, 48:1, 48:2, 48:3, 48:4, 48:5, 49:1, 53:1, 57:1, 57:2, 58:4, 63:1, 81, 81:1, 81:2, 81:3, 81:4, 88, 104, 108, 112, 122, 123, 144, 146, 149, 166, 168, 169, 170, 177, 178, 179, 184, 185, 208, 216, 226, 257, Pigment Violet 3, 19, 23, 29, 30, 37, 50, 88, Pigment Orange 13, 16, 20, 36 or a mixture thereof.

### <<blue or cyan pigment>>

Examples of blue or cyan pigments include pigments selected from Pigment Blue 1, 15, 15:1, 15:2, 15:3, 15:4, 15:6, 16, 17:1, 22, 27, 28, 29, 36, and 60, or mixtures thereof.

### <<green pigment>>

Examples of green pigments include pigments selected from Pigment Green 7, 26, 36, and 50, and mixtures thereof.

### <<yellow pigment>>

Examples of yellow pigments include Pigment Yellow 1, 3, 12, 13, 14, 17, 34, 35, 37, 55, 74, 81, 83, 93, 94, 95, 97, 108, 109, 110, 137, 138, 139, 153, 154, 155, 157, 166, 167, 168, 180, 185, 193 or a mixture thereof.

### <<black pigment>>

Examples of black pigments include pigment selected from Pigment Black 7, 28, and 26, and mixtures thereof.

### <<Examples of commercially available pigment>>

An example of commercially available pigments includes black Pigment (manufactured by Mikuni), Chromaffin yellow 2080, 5900, 5930, AF-1300, 2700 L, Chromaffin orange 3700 L, 6730, Chromaffin scarlet 6750, Chromaffin Magenta 6880, 6886, 6891 N, 6790, 6887, Chromaffin violet RE, Chromaffin Red 6820, 6830, Chromaffin Blue HS-3, 5187, 5108, 5197, 5085 N, SR-5020, 5026, 5050, 4920, 4927, 4937, 4824, 4933GN-EP, 4940, 4973, 5205, 5208, 5214, 5221, 5000P, Chromaffin green 2GN, 2GO, 2G-550D, 5310, 5370, 6830, Chromaffin black a-1103, Seikafast Yellow 10GH, A-3, 2035, 2054, 2200, 2270, 2300, 2400 (B), 2500, 2600, ZAY-260, 2700 (B), 2770, Seikafast red 8040, C405 (F), CA120, LR-116, 1531B, 8060R, 1547, ZAW-262, 1537B, GY, 4R-4016, 3820, 3891, ZA-215, Seikafast Carmine 6B1476T 7, 1483 LT, 3840, 3870, Seikafast Bordeaux 10B 430, Seikalight rose R40, Seikalight Violet B800, 7805, Seikafast Maroon 460 N, Seikafast orange 900, 2900, Seikalight blue C718, A612, Cyanine blue 4933M, 4933GN-EP, 4940, 4973 (or more), dainichiseika Color & Chemicals Mfg. Co., Ltd, note, "Chromaffin" is a registered trademark owned by the same company), KET Yellow 401, 402, 403, 404, 405, 406, 416, 424, KET Orange 501, KET Red 301, 302, 303, 304, 305, 306, 307, 308, 309, 310, 336, 337, 338, 346, KET Blue 101, 102, 103, 104, 105, 106, 111, 118, 124, KET Green 201 (or higher), (manufactured by DIC Corporation), Colortex Yellow 301, 314, 315, 316, P-624, 314, U10GN, U3GN, UNN, UA-414, U263, Finecol Yellow T-13, T-05, Pigment Yellow1705, Colortex Orange 202, Colortex Red101, 103, 115, 116, D3B, P-625, 102, H-1024, 105C, UFN, UCN, UBN, U3BN, URN, UGN, UG276, U456, U457, 105C, USN, Colortex Maroon601, Colortex BrownB610 N, Colortex Violet600, Pigment Red 122, Colortex Blue516, 517, 518, 519, A818, P-908, 510, Colortex Green402, 403, Colortex Black702, u905 (or, Sanyo Shikiso Co, note, "Colortex" and "Finecol" are registered trademarks of the same company), Lionol Yellow1405G, Lionol Blue FG7330, FG7350, FG7400G, FG7405G, ES, ESP-S (or, toyo Ink Co., Ltd, note, "Lionol" is a registered trademark of the same company), Toner Magenta E02, Permanent RubinF6B, Toner Yellow HG, Permanent Yellow GG-02, Hostapeam BlueB2G (or, Hoechst Industries, Ltd), Novoperm P-HG, Hostaperm Pink E, Hostaperm Blue B2G (or, clariant, note, "Novoperm" and "Hostaperm" are registered trademarks of the same company), carbon black #2600, #2400, #2350, #2200, #1000, #990, #980, #970, #960, #950, #850, MCF88, #750, #650, MA600, MA7, MA8, MA11, MA100, MA100R, MA77, #52, #50, #47, #45, #45L, #40, #33, #32, #30, #25, #20, #10, #5, #44, CF9 (mitsubishi Chemical Corporation) and the like.

### <<dispersion of pigment>>

The pigment can be dispersed using, for example, a ball mill, a sand mill, an attritor, a roll mill, an agitator, a Henschel mixer, a colloid mill, an ultrasound homogenizer, a pearl mill, a wet-type jet mill, or a paint shaker.

The dispersion of the pigment is preferably performed such that the volume average particle diameter of the pigment particle is preferably in a range of 0.08 to 0.5 µm. It is also preferable that the dispersion is performed such that the maximum particle diameter of the pigment particle is preferably in a range of 0.3 to 10 µm and more preferably in a range of 0.3 to 3 µm.

The dispersion of the pigment is adjusted by selection of the pigment, the dispersant, and the dispersion medium, dispersion conditions, filtration conditions, and the like.

### <<dispersant>>

The ink according to the present invention may further contain a dispersant in order to enhance the dispersibility of the pigment.

An example of the dispersant includes carboxylic acid ester having hydroxy group, salt of long-chain polyaminoamide and high-molecular-weight acid ester, salts of high molecular weight polycarboxylic acids, salt of long-chain polyaminoamide and polar acid ester, high molecular weight unsaturated acid ester, high molecular copolymer, modified polyurethane, modified polyacrylate, polyetherester-type anionic surfactant, naphthalenesulfonic acid formalin condensate salt, aromatic sulfonic acid formalin condensate salt, polyoxyethylene alkyl phosphate ester, polyoxyethylene nonylphenyl ether, and stearylamine acetate and the like. Examples of commercially available products of the dispersant include Solsperse (R) series manufactured by Avecia Inc, and PB series manufactured by Ajinomoto Fine - Techno Co., Inc.

### <<dispersion aid>>

The ink according to the present invention may further contain a dispersion aid, if necessary.

The dispersion aid may be selected according to the pigment.

The total content of the dispersant and the dispersion aid is preferably in the range of 1 to 50% by mass relative to the total mass of the pigment.

### <<dispersion medium>>

The ink according to the present invention may further contain a dispersion medium for dispersing the pigment, if necessary.

The ink of the present invention may contain a solvent as a dispersion medium.

### [7-3. Other Additives]

The ink of the present invention may further contain a coupling agent, a solvent, and the like, if necessary.

### (coupling agent)

The ink according to the present invention may further contain various coupling agents, if necessary. Inclusion of the coupling agent can improve adhesion to a printed wiring board.

Examples of the various coupling agents include silane-based, titanium-based, and aluminum-based coupling agents.

### (Solvent)

The ink of the present invention is preferably solvent-free from the viewpoints of rapid curability and ejection stability, but it may be added for adjustment of the ink viscosity.

### [Method for Producing Inkjet Ink Composition]

The method for producing the inkjet ink composition of the present invention can be prepared by mixing the compound having a structure represented by the General Formula (1) or a salt thereof (A), the (meth) acrylate (B) having a low (meth) acrylic equivalent, and the (meth) acrylate (C) having a high (meth) acrylic equivalent under heating.

In addition, it is preferable to filter the obtained mixed liquid with a predetermined filter. Note that in a case of preparing an ink containing a pigment, it is preferable to prepare a pigment dispersion liquid containing the pigment and a polymerizable compound and then mix the pigment dispersion liquid with other components. The pigment dispersion liquid may further contain a dispersant.

The pigment dispersion liquid can be prepared by dispersing a pigment in a polymerizable compound. The pigment can be dispersed using, for example, a ball mill, a sand mill, an attritor, a roll mill, an agitator, a Henschel mixer, a colloid mill, an ultrasound homogenizer, a pearl mill, a wet jet mill, a paint shaker, or the like. At this time, a dispersant may be added.

### [recorded article of the Present Invention]

The recorded article of the present invention is obtained by curing the above-described inkjet ink composition of the present invention with at least active energy ray or heat.

That is, the recorded article of the present invention refers to matter recorded on a recording medium by an inkjet recording method described later using the inkjet ink composition of the present invention. In the present invention, the cured product simply refers to a product obtained by curing the inkjet ink composition of the present invention, and is substantially the same as the recorded article.

### [inkjet recording method of the present invention]

The inkjet recording method of the present invention uses the inkjet ink composition of the present invention, and includes a step of ejecting the inkjet ink from an inkjet head to cause the inkjet ink to land on a recording medium, and a step of curing the inkjet ink having landed on the recording medium at least with active energy ray or heat.

In the inkjet method, an ink is ejected from an inkjet head and landed on a recording medium. The inkjet method is suitably used particularly for formation of a solder resist pattern and printing of characters because it is easy to apply an ink only to a necessary portion.

In the step of curing by irradiation with active energy ray, the ink may be cured immediately after the step of landing the ink, or may be cured at once after the step of landing the ink is completed.

The ink according to the present invention has a relatively high viscosity at room temperature (25°C) and does not tend to wet-spread after landing on a recording medium. For this reason, it is not necessary to cure the ink immediately after the ink lands on the recording medium, and it is possible to collectively cure the ink after the ink is ejected in a certain predetermined range and lands on the recording medium. By curing collectively, ejection failure due to leaked light can be reduced.

In the present invention, the "collective irradiation", the "collective heating", and the "collective curing" first eject a plurality of ink droplets in a certain predetermined range to be landed on a recording medium. Thereafter, the entirety of the plurality of ink droplets landed and present within the certain range is cured by irradiation with active energy ray or heating at the same time.

That is, the ink is not cured for each droplet of the ink landed on the recording medium. This means that the landing of the ink, the irradiation with the active energy ray, or the heating and the curing are collectively performed for each predetermined range (for example, all the ink necessary for forming a predetermined image (design) are landed).

Further, it is preferable to form a solder resist film used for a printed circuit board by the inkjet recording method of the present invention.

Hereinafter, the inkjet recording method of the present invention will be described. The inkjet recording method of the present invention includes the steps of (1) ejecting the ink of the present invention from an inkjet head and landing the ink on a recording medium; and (2) curing the ink landed on the recording medium with active energy ray or heat.

### [Step (1)]

(1) In the step (1), the ink of the present invention is ejected from a nozzle of an inkjet head to be landed on a recording medium. The recording medium is not particularly limited, but is preferably a printed circuit board.

The method of ejection from an inkjet head may be either an on-demand method or a continuous method.

The inkjet head of the on-demand system may be any of electro-mechanical conversion systems such as a single cavity type, a double cavity type, a bender type, a piston type, a share mode type, and a shared wall type, and electro-thermal conversion systems such as a thermal inkjet type and a Bubble Jet (R) (Bubble Jet is a registered trademark of Canon Inc) type.

Ejection stability can be obtained by ejecting droplets of the ink from the inkjet head in a heated state. The temperature of the ink when filled into an inkjet head is preferably within a range of 40 to 100°C. The temperature is more preferably in the range of 40 to 90°C from the viewpoint of further enhancing the ejection stability. Furthermore, the viscosity of the ink is preferably in a range of 7 to 15 mPa · s and more preferably in a range of 8 to 13 mPa · s at the ejection temperature.

When a sol-gel phase transition type ink containing a gelling agent is used, the temperature of the ink in the inkjet head is preferably (gelation temperature + 10) to (gelation temperature + 30) °C.

When the temperature of the ink in the inkjet head is (gelation temperature + 10) °C or more, the ink does not gel in the inkjet head or on the nozzle surface, and sufficient ejection stability is obtained. In addition, since the temperature of the ink is equal to or lower than (the gelation temperature + 30) °C, it is possible to prevent each component included in the ink from deteriorating due to the temperature.

The method of heating the ink is not particularly limited. For example, at least one of an ink supply system such as an ink tank constituting the head carriage, a supply pipe, and a front chamber ink tank immediately before the head, a pipe with a filter, a piezo head, and the like can be heated by a panel heater, a ribbon heater, warm water, or the like.

The droplet amount of ink to be ejected is preferably in a range of 2 to 20pL from the viewpoint of recording speed and image quality.

The recording medium is not particularly limited, and various metals, glass, ceramics, polyimide films, PET films, and the like can be used. In terms of enhancing adhesion, it is preferable to include an inorganic substance such as metal and glass on the surface.

Examples of the metal include copper, aluminum, iron, and oxides thereof. In addition, it can be particularly suitably used for a printed circuit board containing an inorganic substance such as metal or glass on the surface. As an example of the printed circuit board, copper-clad laminates of all grades (FR-4 and the like) using materials such as copper-clad laminates for high-frequency circuits using glass fabric epoxy, glass polyimide, glass fabric/nonwoven fabric epoxy, glass fabric/paper epoxy and the like can be suitably used.

### [Step (2)]

(2) In the step of [1], the ink landed on the recording medium is cured by active energy ray or heat. The ink of the present invention can be cured by irradiation with active energy ray alone or by heating alone, but it is preferable to irradiate with at least active energy ray. Furthermore, it is more preferable to heat.

Examples of the active energy ray include an electron beam, an ultraviolet ray, an α-ray, a γ-ray, and an X-ray, and an ultraviolet ray is preferable.

The irradiation with ultraviolet rays can be performed with use of, for example, a water-cooled LED produced by Phoseon Technology Co., Ltd. under conditions of a wavelength 395 nm. When the LED is used as the light source, it is possible to suppress curing failure of the ink due to melting of the ink by radiant heat of the light source.

Preferably, a peak irradiance of ultraviolet rays having wavelengths in a range of 370 to 410 nm on the solder resist film is in a range of 0.5 to 10 W/cm ² . In addition, it is more preferably within a range of 1 to 5 W/cm ², and the irradiation with ultraviolet rays is performed so as to be within the above range. In light of suppressing application of radiant heat to the ink, the light amount applied to the solder resist film is preferably less than 1000 mJ/cm ².

The irradiation with the active energy ray is preferably performed within 0.001 to 300 seconds after the landing of the ink. In particular, in order to form a high-definition solder resist film, the heat treatment is more preferably performed for 0.001 to 60 seconds.

From the viewpoint of suppressing polymerization inhibition due to oxygen, it is preferable that the ink is cured by irradiating the landed ink with active energy ray in an atmosphere having an oxygen concentration within a range of 0.1 to 10.0 vol%. Furthermore, from the viewpoint of making blooming less likely to occur, the oxygen concentration is more preferably in a range of 0.5 to 8.0 vol%, and still more preferably in a range of 0.5 to 6.0 vol%.

The heating method is, for example, preferably placing in an oven set within a range of 110 to 180°C for 10 to 90 minutes.

### [Inkjet Recording System of the present invention]

The inkjet recording system of the present invention uses the inkjet ink composition of the present invention, and includes an inkjet head that ejects the inkjet ink composition, an active energy ray irradiation section that irradiates the inkjet ink composition landed on a recording medium with at least active energy rays, or a heating section that heats the inkjet ink composition.

That is, the system of the present invention uses a recording apparatus including an inkjet head that ejects the inkjet ink composition, an active energy ray irradiation section that irradiates the inkjet ink composition landed on a recording medium with active energy ray, or a heating section that heats the inkjet ink composition irradiated with the active energy ray, and the ink of the present invention.

Note that the recording method of the inkjet recording apparatus is preferably a scanning method from the viewpoint of ejection stability and printing accuracy.

Examples of the type of the inkjet recording apparatus (printer) include a single pass printer and a serial printer. The single-pass printer includes a line head having a length (recording medium width) corresponding to the width of the recording medium. The line head is fixed without (substantially) moving, and printing is performed in one pass (single pass).

On the other hand, in the serial printer, printing is usually performed in two or more passes (multi-pass) while the head reciprocates (performs shuttle movement) in a direction orthogonal to the conveyance direction of the recording medium.

In a single-pass printer, a plurality of inkjet heads needs to be arranged to form a line head, which requires a relatively large number of inkjet heads. On the other hand, a serial printer can be constituted by only a small number of recording heads.

In the present invention, either type of printer can be used, and preferably, a serial printer can be used. example

Hereinafter, the present invention will be specifically described with reference to example, but the present invention is not limited thereto. Note that the operations in the following Examples were performed at room temperature (25°C) unless otherwise specified. Further, unless otherwise specified, "% by mass" and "parts by mass" mean "% by mass" and "parts by mass", respectively.

### < Preparation of Yellow Pigment Dispersion Liquid Y >

The following dispersant 1 and dispersant 2, and a dispersion medium were placed in a stainless steel beaker, heated, stirred, and dissolved for 1 hour while heating on a hot plate at 65°C, and cooled to room temperature. Thereafter, the following pigments were added thereto, and the mixture was placed in a glass bottle together with zirconia beads 200 g having a size of 0. 5 mm and the glass bottle was hermetically sealed.

This was subjected to a dispersion treatment with a paint shaker until a desired particle diameter was obtained, and then the zirconia beads were removed.

| | | |
|---|---|---|
| dispersant 1: | PX4701 (manufactured by Basf SE) | 6.0 parts by mass |
| dispersant 2: | Solsperse22000 (manufactured by The Lubrizol Corporation) | 0.3 parts by mass |
| Dispersion medium: | dipropylene glycol diacrylate (containing 0.2% UV-10) | 61.5 parts by mass |
| pigment: | PY185 (manufactured by Basf SE, paliotol yellow D1155) | 10.2 parts by mass |

### < Preparation of Cyan Pigment Dispersion Liquid C >

The yellow pigment dispersion liquid Y was prepared in the same manner as the pigment dispersion liquid Y except that the dispersant, the dispersion medium, and the pigment were changed as follows.

| | | |
|---|---|---|
| dispersant: | PX4701 (manufactured by Basf SE) | 7.0 parts by mass |
| Dispersion medium: | dipropylene glycol diacrylate (containing 0.2% UV-10) | 70 PARTS BY MASS |
| pigment: PB15: | 4 (Chromaffin (R) Blue 6332JC, manufactured by DainichiseikaColor & Chemicals Mfg. Co., Ltd) | 23 parts by mass |

The compound having a structure represented by General Formula (1) or a salt thereof (A), the (meth) acrylate having a low (meth) acrylic equivalent (B), the (meth) acrylate having a high (meth) acrylic equivalent (C), the polymerization initiator, the polymerization inhibitor, the gelling agent, other monomers, and the like used in the preparation of the following ink are as follows.

### <A compound having a structure represented by General Formula (1) or a salt thereof (A) >

A 1: the Exemplary Compound A-1
A -2: the Exemplary Compound A-2
A -3: the Exemplary Compound A-3

### <(B) a (meth) acrylate of low (meth) acrylic equivalent >

DPHA:M600 (manufactured by Miwon) (hexafunctional (meth) acrylate: dipentaerythritol hexaacrylate)
DPPA:M500 (manufactured by Miwon) (5-functional (meth) acrylate: dipentaerythritol pentaacrylate)
PET3A:EM235 (manufactured by Nagase & Co., Ltd) (3-functional (meth) acrylate: pentaerythritol triacrylate)
PET4A:EM241 (manufactured by Nagase & Co., Ltd) (tetrafunctional (meth) acrylate: pentaerythritol tetraacrylate)
TMPTA:SR351 (manufactured by Sartomer Company, Inc) (trifunctional (meth) acrylate: trimethylolpropane triacrylate)

### <(C) a (meth) acrylate of high (meth) acrylic equivalent >

DP6CAHA:DPCA60 (manufactured by Nippon Kayaku Co., Ltd) (CA-modified;(6-functional (meth) acrylate: caprolactam-modified dipentaerythritol hexaacrylate).

DP12CAHA:DPCA120 (manufactured by Nippon Kayaku Co., Ltd) (CA-modified, 6-functional (meth) acrylate: caprolactam-modified dipentaerythritol hexaacrylate).

TMP (EO) 9TA:EM2382 (manufactured by Nagase & Co., Ltd) (EO-modified, 3-functional (meth) acrylate: trimethylolpropane triacrylate).

TMP (EO) 15TA:SR9035 (manufactured by Sartomer Company, Inc) (EO-modified, 3-functional (meth) acrylate: trimethylolpropane triacrylate).

NP (PO) 2A:M1602 (manufactured by Miwon) (PO-modified, monofunctional (meth) acrylate: nonylphenol acrylate)

PEG400DA:M280 (manufactured by Miwon) (bifunctional (meth) acrylate: ethylene glycol 200 diacrylate).

BPA (EO) 20DA: M2200 (manufactured by Miwon) (EO-modified, bifunctional (meth) acrylate: bisphenol -A diacrylate)

### < Other monomers >

DPGDA:M222 (manufactured by Miwon) (dipropylene glycol diacrylate)

### <gelling agent>

gelling agent A: EXCEPARL SS (manufactured by Kao Corporation) (aliphatic ester represented by the General Formula (G2))

### <Polymerization Initiator>

TypeI type (Norrish type I) A:

| | |
|---|---|
| Omnirad (R) 907, IGM | Resins (BV. ) |

TypeI type (Norrish type I) B:

| | |
|---|---|
| Omnirad (R) 819, IGM | Resins (BV.) |

TypeII type (Norrish type II):

| | |
|---|---|
| Speedcure(R) | ITX (manufactured by Lambson) |

### <polymerization inhibitor >

| | |
|---|---|
| UV-10 | Irgastab (R) (manufactured by Basf SE) |

### < Preparation of Ink >

The following components were mixed, and the mixture was filtered through a Teflon (R) 3 µm membrane filter manufactured by ADVANTEC to prepare ink 1.

| | | |
|---|---|---|
| <<compound having a structure represented by General Formula (1) or salt thereof (A)>> | | |
| A-3 | 10.0 partsby mass | |
| <<(meth) acrylate (B) of low (meth) acrylic equivalent>> | | |
| DPPA | 10.0 partsby mass | |
| <<(meth) acrylate (C) of high (meth) acrylic equivalent>> | | |
| DP6CAHA | | 10.0 parts by mass |
| <<other monomers>> | | 60.7 parts by mass |
| <<polymerization initiator>> | | |
| Omnirad 907 | | 3.0 parts by mass |
| Omnirad 819 | | 3.0 parts by mass |
| Speedcure ITX | | 2.0 parts by mass |
| <<polymerization inhibitor>> | | |
| Irgastab(R) | UV-10 | 0.1 parts by mass |
| <<pigment dispersion liquid>> | | |
| dispersion liquid Y | | 0.7 parts by mass |
| dispersion liquid C | | 0.5 parts by mass |

Each ink was prepared in the same manner as in the preparation of the ink 1 except that the compound or salt thereof (A), the (meth) acrylate (B) having a low (meth) acrylic equivalent, the (meth) acrylate (C) having a high (meth) acrylic equivalent, the other monomers, the gelling agent, the polymerization initiator, the polymerization inhibitor, the pigment dispersion liquid, and the like were changed to the kinds and the addition amounts listed in Tables I to V.

### < Ink cured film formation by inkjet method >

Each of the prepared inks was loaded into an inkjet recording apparatus having an inkjet recording head provided with a piezo-type inkjet nozzle. Using this apparatus, a solder resist pattern was formed on a copper-clad laminate for a printed wiring board (FR-4, 1. 6 mm thick, 150 mm × 95 mm large) to obtain a cured film (or cured product).

The ink supply system includes an ink tank, an ink channel, a sub ink tank immediately before the inkjet recording head, a pipe with a metal filter, and a piezo head. The ink is heated to 80°C from the ink tank to the head portion. A heater was also incorporated in the piezo head to heat the ink in the recording head to 80°C. The piezo head had nozzle diameters of 22 µm, and the heads with 360dpi nozzle resolution were arranged in a staggered manner to form 720dpi nozzle row.

Using this inkjet apparatus, a voltage was applied so that the droplet amount became a dot of 6. 0pL, and a solid pattern of 20 mm × 50 mm was printed on the substrate so as to have a thickness of 20 µm, and then the coating film was cured by irradiation with an LED lamp (manufactured by Phoseon Technology Co., Ltd., 395 nm, 8 W/cm ², water cooled unit) in 1 W/cm ², 500 mJ/cm ². Thereafter, the resultant was put into an oven set to 150°C for 60 minutes to be cured, thereby obtaining a cured film.

### [Evaluation]

### < adhesion >

For the prepared printed sample of the solid pattern, cuts were made in the cured film in a grid pattern according to the cross-cut method of JIS standard K5600, and an adhesive tape was attached and peeled off to observe the peeling state of the cured film. In the following standard, "AAA", "AA", and "A" were evaluated as having no practical problem.

### (Standard)

AAA: The adhesive residue rate is 100%.
AA: An adhesive residue rate is 80% or more and less than 100%.
A: The adhesive residue rate is 60% or more and less than 80%.
B: The adhesive residue rate is less than 60%.

### <Pencil hardness>

The pencil hardness of the surface of the printed sample of the solid pattern was measured according to the method described in JIS K 5400. A pencil hardness of 5H or more was considered to be acceptable for practical use.

### <Acid resistance (chemical resistance) >

The created solid pattern was immersed in a 10% HCl aqueous solution at 25°C for 30 minutes and then washed with pure water, and then the moisture was wiped off and evaluation was performed according to the following standard. In the following standard, "AAAA", "AAA", "AA", and "A" were evaluated as having no problem in practical use.

### (Standard)

AAAA: The adhesive residue rate is 100%.
AAA: The adhesive residue rate is 90% or more and less than 100%.
AA: An adhesive residue rate is 80% or more and less than 90%.
A: The adhesive residue rate is 60% or more and less than 80%.
B: The adhesive residue rate is less than 60%.

### < Coatability (Viscosity) >

The 80 °C viscosity of each of the prepared inks was measured with a Physica MCR301 (manufactured by Anton Paar GmbH) at a shear rate of 1000 (1/s). In the following standard, when the evaluation is "A", the ejection from the inkjet head is stable, and the coatability is excellent.

### (Standard)

A: The viscosity is within a range of 7 to 15 mPa s.
B: The viscosity is less than 7 mPa s or greater than 15 mPa s.

### [Table 1]

**TABLE I**

| | | | | | | | |
|---|---|---|---|---|---|---|---|
| INK NO | | | | 1 | 2 | 3 | 4 |
| A COMPOUND HAVING A STRUCTURE REPRESENTED BY GENERAL FORMULA (1) OR A SALT THEREOF (A) [PARTS BY MASS] | COMPOUND | | | | | | |
| | A-1 | | | - | - | - | - |
| | A-2 | | | - | - | - | - |
| | A-3 | | | 10.0 | 10.0 | 10.0 | 10.0 |
| (METH) ACRYLATE (B) OF LOW (METH) ACRYLIC EQUIVALENT [PARTS BY MASS] | COMPOUND | MOLECULAR WEIGHT | ACRYLIC EQUIVALENT | - | 10.0 | - | - |
| | DPHA | 579 | 96 | | | | |
| | DPPA | 524 | 105 | 10.0 | - | 10.0 | 10.0 |
| | PETJA | 298 | 99 | - | | | |
| | PET4A | 352 | 88 | - | | - | - |
| | TMPTA | 296 | 99 | | | | - |
| (METH) ACRYLATE (O) OF HIGH (METH) ACRYLIC EQUIVALENT [PARTS BY MASS] | COMPOUND | MOLECULAR WEIGHT | ACRYLIC EQUIVALENT | 10.0 | 10.0 | - | 10.0 |
| | DP6CAHA | 1263 | 211 | | | | |
| | DP12CAHA | 1948 | 325 | - | - | 10.0 | - |
| | TMP(EO)9TA | 692 | 231 | - | - | - | - |
| | TMP(EO)15T A | 956 | 319 | - | - | - | - |
| | NP(PO)2A | 390 | 390 | - | - | - | - |
| | PEG400DA | 508 | 254 | - | - | - | - |
| | BPA(EO)20D A | 1216 | 608 | - | - | - | - |
| OTHER MONOMER [PARTS BY MASS] | COMPOUND | MOLECULAR WEIGHT | ACRYLIC EQUIVALENT | 60.7 | 60.7 | 60.7 | 59.7 |
| | DPGDA | 242 | 121 | | | | |
| GELLING AGENT [PARTS BY MASS] | EXEPEARL SS | | | - | - | - | 1.0 |
| POLYMERIZATION INITIATOR [PARTS BY MASS] | Omnirad 907 | | | 3.0 | 3.0 | 3.0 | 3.0 |
| | Omnirad 819 | | | 3.0 | 3.0 | 3.0 | 3.0 |
| | ITX Speedcure | | | 2.0 | 2.0 | 2.0 | 2.0 |
| POLYMERIZATION INHIBITOR [PARTS BY MASS] | UV-10 | | | 0.1 | 0.1 | 0.1 | 0.1 |
| PIGMENT DISPERSION LIQUID [PARTS BY MASS] | DISPERSION LIQUID Y | | | 0.7 | 0.7 | 0.7 | 0.7 |
| | DISPERSION LIQUID C | | | 0.5 | 0.5 | 0.5 | 0.5 |
| TOTAL [PARTS BY MASS] | | | | 100.0 | 100.0 | 100.0 | 100.0 |
| EVALUATION | ADHESION | | | AAA | AAA | AAA | AAA |
| | PENCIL HARDNESS | | | 6H | 6H | 5H | 8H |
| | ACID RESISTANCE | | | AAA | AAA | AAAA | AAA |
| | COATABILITY | | | A | A | A | A |
| REMARKS | | | | PRESENT INVENTION | PRESENT INVEN-T ION | PRESENT INVEN-T ION | PRESENT INVEN-T ION |

### [Table 2]

**TABLE 11**

| | | | | | | | |
|---|---|---|---|---|---|---|---|
| INK NO. | | | | 5 | 6 | 7 | 8 |
| A COMPOUND HAVING A STRUCTURE REPRESENTED BY GENERAL FORMULA (1) OR A SALT THEREOF (A) [PARTS BY MASS] | COMPOUND | | | | | | |
| | A-1 | | | 10.0 | - | - | - |
| | A-2 | | | - | 10.0 | - | - |
| | A-3 | | | - | - | 10.0 | 10.0 |
| (METH) ACRYLATE (B) OF LOW (METH) ACRYLIC EQUIVALENT [PARTS BY MASS] | COMPOUND | MOLECULAR WEIGHT | ACRYLIC EQUIVALENT | - | - | - | - |
| | DPHA | 579 | 96 | | | | |
| | DPPA | 524 | 105 | 10.0 | 10.0 | - | - |
| | PET3A | 298 | 99 | - | - | 10.0 | - |
| | PET4A | 352 | 88 | - | - | - | 10.0 |
| | TMPTA | 296 | 99 | - | - | - | - |
| (METH) ACRYLATE (C) OF HIGH (METH) ACRYLIC EQUIVALENT [PARTS BY MASS] | COMPOUND | MOLECULAR WEIGHT | ACRYLIC EQUIVALENT | 10.0 | 10.0 | 10.0 | 10.0 |
| | DP6CAHA | 1263 | 211 | | | | |
| | DP12CAHA | 1948 | 325 | - | - | - | - |
| | TMP(EO)9TA | 692 | 231 | - | - | - | - |
| | TMP(EO)15TA | 956 | 319 | - | - | - | - |
| | NP(PO)2A | 390 | 390 | - | - | - | - |
| | PEG400DA | 508 | 254 | - | - | - | - |
| | BPA(EO)20DA | 1216 | 608 | - | - | - | - |
| OTHER MONOMER [PARTS BY MASS] | COMPOUND | MOLECULAR WEIGHT | ACRYLIC EQUIVALENT | 60.7 | 60.7 | 60.7 | 60.7 |
| | DPGDA | 242 | 121 | | | | |
| GELLING AGENT [PARTS BY MASS] | E XEPEARL SS | | | - | - | - | - |
| POLYMERIZATION INITIATOR [PARTS BY MASS] | Omnirad 907 | | | 3.0 | 3.0 | 3.0 | 3.0 |
| | Omnirad 819 | | | 3.0 | 3.0 | 3.0 | 3.0 |
| | Speedcure ITX | | | 2.0 | 2.0 | 2.0 | 2.0 |
| POLYMERIZATION INHIBITOR [PARTS BY MASS] | UV-10 | | | 0.1 | 0.1 | 0.1 | 0.1 |
| PIGMENT DISPERSION LIQUID [PARTS BY MASS] | DISPERSION LIQUID Y | | | 0.7 | 0.7 | 0.7 | 0.7 |
| | DISPERSION LIQUID C | | | 0.5 | 0.5 | 0.5 | 0.5 |
| TOTAL [PARTS BY MASS] | | | | 100.0 | 100.0 | 100.0 | 100.0 |
| EVALUATION | ADHESION | | | AAA | AAA | AAA | AAA |
| | PENCIL HARDNESS | | | 5H | 5H | 6H | 6H |
| | ACID RESISTANCE | | | AAA | AAA | AAA | AAA |
| | COATABILITY | | | A | A | A | A |
| REMARKS | | | | PRESENT INVENTION | PRESENT INVENTION | PRESENT INVENTION | PRESENT INVEN-TION |

### [Table 3]

**TABLE III**

| | | | | | | |
|---|---|---|---|---|---|---|
| INK NO. | | | | 9 | 10 | 11 |
| A COMPOUND HAVING A STRUCTURE REPRESENTED BY GENERAL FORMULA (1) OR A SALT THEREOF (A) [PARTS BY MASS] | COMPOUND | | | | | |
| | A-1 | | | - | - | - |
| | A-2 | | | - | - | - |
| | A-3 | | | 10.0 | 10.0 | 10.0 |
| (METH) ACRYLATE (B) OF LOW (METH) ACRYLIC EQUIVALENT [PARTS BY MASS] | COMPOUND | MOLECULAR WEIGHT | ACRYLIC EQUIVALENT | - | - | - |
| | DPHA | 579 | 96 | | | |
| | DPPA | 524 | 105 | - | - | - |
| | PET3A | 298 | 99 | - | - | - |
| | PET4A | 352 | 88 | - | - | - |
| | TMPTA | 296 | 99 | 10.0 | 10.0 | 10.0 |
| (METH) ACRYLATE (C) OF HIGH (METH) ACRYLIC EQUIVALENT [PARTS BY MASS] | COMPOUND | MOLECULAR WEIGHT | ACRYLIC EQUIVALENT | 10.0 | - | - |
| | DP6CAHA | 1263 | 211 | | | |
| | DP12CAHA | 1948 | 325 | - | - | - |
| | TMP(EO)9TA | 692 | 231 | - | 10.0 | - |
| | TMP(EO)15TA | 956 | 319 | - 319 | - | 10.0 |
| | NP(PO)2A | 390 | 390 | | | |
| | PEG400DA | 508 | 254 | - | - | - |
| | BPA(EO)20DA | 1216 | 608 | - | - | - |
| OTHER MONOMER [PARTS BY MASS] | COMPOUND | MOLECULAR WEIGHT | ACRYLIC EQUIVALENT | 60.7 | 60.7 | 60.7 |
| | DPGDA | 242 | 121 | | | |
| GELLING AGENT [PARTS BY MASS] | EXEPEARL SS | | | - | - | - |
| POLYMERIZATION INITIATOR [PARTS BY MASS] | Omnirad 907 | | | 3.0 | 3.0 | 3.0 |
| | Omnitad 819 | | | 3.0 | 3.0 | 3.0 |
| | Speedcure ITX | | | 2.0 | 2.0 | 2.0 |
| POLYMERIZATION INHIBITOR [PARTS BY MASS] | UV-10 | | | 0.1 | 0.1 | 0.1 |
| PIGMENT DISPERSION LIQUID [PARTS BY MASS] | DISPERSION LIQUID Y | | | 0.7 | 0.7 | 07 |
| | DISPERSION LIQUID C | | | 0.5 | 0.5 | 0.5 |
| TOTAL [PARTS BY MASS] | | | | 100.0 | 100.0 | 100.0 |
| EVALUATION | ADHESION | | | AAA | AAA | AAA |
| | PENCIL HARDNESS | | | 6H | 6H | 5H |
| | ACID RESISTANCE | | | AAA | AAA | AAAA |
| | COATABILITY | | | A | A | A |
| REMARKS | | | | PRESENT INVENTION | PRESENT INVENTION | PRESENT INVENTION |

### [Table 4]

**TABLE IV**

| | | | | | | |
|---|---|---|---|---|---|---|
| INK NO. | | | | 12 | 13 | 14 |
| A COMPOUND HAVING A STRUCTURE REPRESENTED BY GENERAL FORMULA (1) OR A SALT THEREOF (A) [PARTS BY MASS] | COMPOUND | | | | | |
| | A-1 | | | - | - | - |
| | A-2 | | | - | - | - |
| | A-3 | | | 10.0 | 10.0 | - |
| (METH) ACRYLATE (B) OF LOW (METH) ACRYLIC EQUIVALENT [PARTS BY MASS] | COMPOUND | MOLECULAR WEIGHT | ACRYLIC EQUIVALENT | - | - | - |
| | DPHA | 579 | 96 | | | |
| | DPPA | 524 | 105 | 10.0 | 10.0 | 10.0 |
| | PET3A | 298 | 99 | - | - | - |
| | PET4A | 352 | 88 | - | - | - |
| | TMPTA | 296 | 99 | - | - | - |
| (METH) ACRYLATE (C) OF HIGH (METH) ACRYLIC EQUIVALENT [PARTS BY MASS] | COMPOUND | MOLECULAR WEIGHT | ACRYLIC EQUIVALENT | - | - | 10.0 |
| | DP6CAHA | 1263 | 211 | | | |
| | DP12CAHA | 1948 | 325 | - | - | - |
| | TMP(EO)9TA | 692 | 231 | - | - | - |
| | TMP(EO)15TA | 956 | 319 | - | - | - |
| | NP(PO)2A | 390 | 390 | 10.0 | - | - |
| | PEG400DA | 508 | 254 | - | 10.0 | - |
| | BPA(EO)20DA | 1216 | 608 | - | - | - |
| OTHER MONOMER [PARTS BY MASS] | COMPOUND | MOLECULAR WEIGHT | ACRYLIC EQUIVALENT | 60.7 | 60.7 | 70.7 |
| | DPGDA | 242 | 121 | | | |
| GELLING AGENT [PARTS BY MASS] | EXEPEARL SS | | | - | - | - |
| POLYMERIZATION INITIATOR [PARTS BY MASS] | Omnirad 907 | | | 3.0 | 3.0 | 3.0 |
| | Omnirad 819 | | | 3.0 | 3.0 | 3.0 |
| | Speedcure ITX | | | 2.0 | 2.0 | 2.0 |
| POLYMERIZATION INHIBITOR [PARTS BY MASS] | UV-10 | | | 0.1 | 0.1 | 0.1 |
| PIGMENT DISPERSION LIQUID [PARTS BY MASS] | DISPERSION LIQUID Y | | | 0.7 | 0.7 | 0.7 |
| | DISPERSION LIQUID C | | | 0.5 | 0.5 | 0.5 |
| TOTAL [PARTS BY MASS] | | | | 100.0 | 100.0 | 100.0 |
| EVALUATION | ADHESION | | | AAA | AAA | B |
| | PENCIL HARDNESS | | | 5H | 6H | 6H |
| | ACID RESISTANCE | | | AAAA | AAA | B |
| | COATABILITY | | | A | A | A |
| REMARKS | | | | PRESENT INVEN- TION | PRESENT INVENTION | COMPARATIVE EXAMPLE |

### [Table 5]

**TABLE V**

| | | | | | | |
|---|---|---|---|---|---|---|
| INK NO, | | | | 15 | 16 | 17 |
| A COMPOUND HAVING A STRUCTURE REPRESENTED BY GENERAL FORMULA (1) OR A SALT THEREOF (A) [PARTS BY MASS] | COMPOUND | | | | | |
| | A-1 | | | - | - | - |
| | A-2 | | | - | - | - |
| | A-3 | | | 10.0 | 10.0 | 10.0 |
| (METH) ACRYLATE (B) OF LOW (METH) ACRYLIC EQUIVALENT [PARTS BY MASS] | COMPOUND | MOLECULAR WEIGHT | ACRYLIC EQUIVALENT | - | - | - |
| | DPHA | 579 | 96 | | | |
| | DPPA | 524 | 105 | - | 10.0 | 10.0 |
| | PET3A | 298 | 99 | - | - | - |
| | PET4A | 352 | 88 | - | - | - |
| | TMPTA | 296 | 99 | - | - | - |
| (METH) ACRYLATE (C) OF HIGH (METH) ACRYLIC EQUIVALENT [PARTS BY MASS] | COMPOUND | MOLECULAR WEIGHT | ACRYLIC EQUIVALENT | 10.0 | - | - |
| | DP6CAHA | 1263 | 211 | | | |
| | DP12CAHA | 1948 | 325 | - | - | - |
| | TMP(EO)9TA | 692 | 231 | - | - | - |
| | TMP(EO)15TA | 956 | 319 | - | - | - |
| | NP(PO)2A | 390 | 390 | - | - | - |
| | PEG400DA | 508 | 254 | - | - | - |
| | BPA(EO)20DA | 1216 | 608 | - | - | 10.0 |
| OTHER MONOMER [PARTS BY MASS] | COMPOUND | MOLECULAR WEIGHT | ACRYLIC EQUIVALENT | 70.7 | 70.7 | 60.7 |
| | DPGDA | 242 | 121 | | | |
| GELLING AGENT [PARTS BY MASS] | EXEPEARL SS | | | - | - | - |
| POLYMERIZATION INITIATOR [PARTS BY MASS] | Omnirad 907 | | | 3.0 | 3.0 | 3.0 |
| | Omnirad 819 | | | 3.0 | 3.0 | 3.0 |
| | Speedcure ITX | | | 2.0 | 2.0 | 2.0 |
| POLYMERIZATION INHIBITOR [PARTS BY MASS] | UV-10 | | | 0.1 | 0.1 | 0.1 |
| PIGMENT DISPERSION LIQUID [PARTS BY MASS] | DISPERSION LIQUID Y | | | 0.7 | 0.7 | 0.7 |
| | DISPERSION LIQUID C | | | 0.5 | 0.5 | 0.5 |
| TOTAL [PARTS BY MASS] | | | | 100.0 | 100.0 | 100.0 |
| EVALUATION | ADHESION | | | AAA | AAA | AAA |
| | PENCIL HARDNESS | | | 3H | 6H | 4H |
| | ACID RESISTANCE | | | AAA | B | AAAA |
| | COATABILITY | | | A | A | A |
| REMARKS | | | | COMPARATIVE EXAMPLE | COMPAR-AT IVE EXAMPLE | COMPAR-ATIVE EXAMPLE |

As illustrated in the above results, it is recognized that the ink of the present invention can provide a cured product excellent in adhesion, coating film hardness, and acid resistance as compared with the ink of the comparative example. The ink of the present invention also has satisfactory coatability.

### Industrial Applicability

The present invention is applicable to an inkjet ink composition capable of providing a cured product excellent in coatability, adhesion, coating film hardness, and chemical resistance for inkjet use, a recorded article, an inkjet recording method, and an inkjet recording system.

## Claims

1. An inkjet ink composition which is cured by at least active energy ray or heat, wherein the inkjet ink composition contains:
a compound having a structure represented by the following General Formula (1) or a salt thereof (A);
a (meth) acrylate (B) having a (meth) acrylic equivalent within a range of 71 to 110; and
a (meth) acrylate (C) having a (meth) acrylic equivalent within a range of 200 to 500. 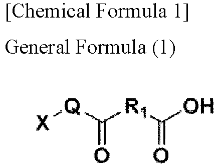
[In the General Formula (1), X represents a substituent group having at least one selected from an acryloyl group, a methacryloyl group, an allyl group, a vinyl group, and derivatives thereof at a terminal thereof.
Q represents an oxygen atom or NR₄, and R₄ represents a hydrogen atom, a substituted or unsubstituted alkyl group, or a substituted or unsubstituted aryl group.
R₁ represents an unsubstituted alkylene group having 1 to 6 carbon atoms.]

2. The inkjet ink composition according to claim 1, wherein in the General Formula (1), X represents a substituent group having at least one selected from a derivative of a methacryloyl group or an acryloyl group at a terminal thereof.

3. The inkjet ink composition according to claim 1, wherein in the General Formula (1), Q represents an oxygen atom.

4. The inkjet ink composition according to claim 1, wherein in the General Formula (1), R₁ represents an unsubstituted alkylene group having 1 or 2 carbon atoms.

5. The inkjet ink composition according to claim 1, wherein the number of (meth) acryloyl groups in the (meth) acrylate (C) having the (meth) acrylic equivalent within the range of 200 to 500 is seven or less.

6. The inkjet ink composition according to claim 1, wherein a molecular weight of the (meth) acrylate (C) having the (meth) acrylic equivalent within the range of 200 to 500 is within a range of 200 to 2000.

7. The inkjet ink composition according to claim 1, wherein the (meth) acrylate (C) having the (meth) acrylic equivalent within the range of 200 to 500 contains any of an ethylene oxide-modified portion, a propylene oxide-modified portion, and an ε-caprolactone-modified portion.

8. The inkjet ink composition according to claim 1, wherein the (meth) acrylate (C) having the (meth) acrylic equivalent within the range of 200 to 500 is an ε-caprolactone-modified product of erythritol hexaacrylate.

9. The inkjet ink composition according to claim 1, wherein the (meth) acrylate (B) having the (meth) acrylic equivalent within the range of 71 to 110 is erythritol hexaacrylate or dipentaerythritol pentaacrylate.

10. The inkjet ink composition according to claim 1, wherein the inkjet ink composition further contains a gelling agent.

11. The inkjet ink composition according to claim 1, wherein the inkjet ink composition is used as an inkjet ink for forming a solder resist pattern used in a printed circuit board.

12. A recorded article obtained by curing the inkjet ink composition according to any one of claims 1 to 11 by at least active energy ray or heat.

13. An inkjet recording method using an inkjet ink composition, wherein
the inkjet recording method uses the inkjet ink composition according to any one of claims 1 to 11, and includes:
ejecting the inkjet ink composition from an inkjet head to land on a recording medium; and
curing the inkjet ink composition landed on the recording medium by at least active energy ray or heat.

14. An inkjet recording system using an inkjet ink composition, wherein
the inkjet recording system uses the inkjet ink composition according to any one of claims 1 to 11, and
the inkjet recording system includes an inkjet head to eject the inkjet ink composition, an active energy ray irradiation section to irradiate the inkjet ink composition having landed on a recording medium by at least active energy ray, or a heating section to heat the inkjet ink composition.
